# EUROPÄISCHE PATENTANMELDUNG

(11) **EP 2 581 179 A2**
(43) Veröffentlichungstag der Anmeldung: **17.04.2013**
(21) Anmeldenummer: 12006976.0
(22) Anmeldetag: 09.10.2012
(51) Int. Cl.: B25J 15/02

(54) **Greifvorrichtung mit Haltevorrichtung**

(30) Priorität: 10.10.2011 DE 102011115366
(71) Anmelder: Zimmer, Günther Stephan, 77866 Rheinau (DE); Zimmer, Martin Johannes, 77866 Rheinau (DE)
(72) Erfinder: Zimmer, Günther Stephan, 77866 Rheinau (DE); Zimmer, Martin Johannes, 77866 Rheinau (DE)
(74) Vertreter: Thämer, Wolfgang

(57) **Zusammenfassung**

Die Erfindung betrifft eine Greifvorrichtung mit Greifelemente tragenden Greifelementeträgern, wobei die Greifelementeträger und mindestens ein elektrodynamisches Stellglied in einem Gehäuse gelagert sind, wobei das oder die elektrodynamischen Stellglieder mindestens einen beweglichen Antriebsschlitten aufweisen, der direkt oder über mindestens ein Getriebe auf mindestens einen beweglichen Greifelementeträger wirkt, um das oder die Greifelemente zwischen einer Offen- und Schließstellung zu bewegen, wobei der Antriebsschlitten in mindestens eine Schubrichtung elektrisch antreibbar ist. Der Antriebsschlitten, oder mindestens ein Getriebeteil, wird in der Offen- und/oder der Schließstellung des oder der Greifelemente durch mindestens eine - nur für den Auf- und den Abbau der Haltekraft mindestens eine Fremdenergie benötigende - Haltevorrichtung lösbar fixiert.

Mit der vorliegenden Erfindung wird eine Greifvorrichtung entwickelt, die bei großer Klemmkraft und einem geringen Energiebedarf nur wenig Bauraum benötigt. Zudem ist sie aus wenigen, unkomplizierten Einzelteilen gefertigt.

## Beschreibung

Die Erfindung betrifft eine Greifvorrichtung mit Greifelemente tragenden Greifelementeträgern, wobei die Greifelementeträger und mindestens ein elektrodynamisches Stellglied in einem Gehäuse gelagert sind, wobei das oder die elektrodynamischen Stellglieder mindestens einen beweglichen Antriebsschlitten oder eine Antriebswelle aufweisen, der oder die direkt oder über mindestens ein Getriebe auf mindestens einen beweglichen Greifelementeträger wirkt, um das oder die Greifelemente zwischen einer Offen- und Schließstellung zu bewegen, wobei der Antriebsschlitten in mindestens eine Schubrichtung oder die Antriebswelle in eine Rotationsrichtung elektrisch antreibbar ist.

Aus der DE 197 15 083 A1 ist ein mechanischer Greifer bekannt, der über einen elektrodynamischen Antrieb verfügt. Der Greifer trägt an einem rahmenförmigen Gehäuse angeformte, bereichsweise elastische Greifelemente, die über ebenfalls elastische Koppelstangen an einem Schlitten angelenkt sind. Auf dem Schlitten ist eine ebene Tauchspule angeordnet, die zwischen gehäuseseitig gelagerten Dauermagneten positioniert ist. Bei einem Bestromen der Tauchspule bewegt der Schlitten über Koppelstangen die Greifelemente.

Aus der US 5 938 257 A und der DE 82 20 189 U1 ist jeweils ein Greifer bekannt, der über eine Kombination aus mehreren, hintereinander angeordneten Getrieben verfügt. Eine erste Getriebestufe umfasst hierbei jeweils ein Kniehebelgetriebe. Beide Greifer werden mittels einer druckluftbetriebenen Zylinder-Kolben-Einheit angetrieben.

Der vorliegenden Erfindung liegt die Problemstellung zugrunde, eine Greifvorrichtung zu entwickeln, die bei großer Klemmkraft und einem geringen Energiebedarf nur wenig Bauraum benötigt. Zudem sollen sich ihre Greifelemente bei wartungsarmer, einfacher und sicherer Handhabung reaktionsschnell und nahezu verschleißfrei öffnen und schließen lassen.

Diese Problemstellung wird mit den Merkmalen des Patentanspruchs 1 gelöst. Dazu wird der Antriebsschlitten oder mindestens ein Getriebeteil in der Offen- und/oder der Schließstellung des oder der Greifelemente durch mindestens eine - nur für den Auf- und den Abbau der Haltekraft mindestens eine Fremdenergie benötigende - Haltevorrichtung lösbar fixiert.

Zu den hier beschriebenen Greifvorrichtungen gehören u.a. die Parallel- und die Winkelgreifer. Die einzelnen Greifvorrichtungen können hierbei mit zwei oder mehr Greifelementen ausgestattet sein. Die Mehrfachgreifer werden zur Gruppe der zentralen Greifer gezählt. Bei den vorgenannten Vorrichtungen können zum einen alle Greifelemente einer Greifvorrichtung zueinander synchron zeitgleich verfahren werden, um so ein Werkstück präzise an einem bestimmten Ort zu übernehmen oder zu übergeben. Zum anderen kann auch ein Teil der Greifelemente gegenüber dem Greifergehäuse der Vorrichtung ortsfest sein, sodass sich die anderen Greifelemente auf diesen oder diese beim Greifen zubewegen. Zwischen einem Greifelement und einem Stellglied ist dabei oft mindestens ein mechanisches Getriebe zwischengeschaltet.

Die erwähnten Greifvorrichtungen haben Greifelemente, die auf angetriebenen schlittenartigen Greifelementeträgern angeordnet sind. Dadurch kann die einzelne Greifvorrichtung durch den einfachen Wechsel der Greifelemente an andere Werkstücke angepasst werden. Dennoch ist es möglich, die einzelnen Greifelementeträger und die jeweiligen Greifelemente als einteilige Bauteile zu fertigen. Die Stellglieder wirken dann direkt auf diese Greifelemente.

Das oder die die Greifelemente antreibenden elektrodynamischen Stellglieder basieren auf einem aus dem Lautsprecherbereich bekannten Tauchspulenprinzip. Eine bestrombare Tauchspule eines Lautsprechers wird dabei linear beweglich im Spalt eines Topfmagnets geführt. Der Topfmagnet stellt ein konstantes Magnetfeld zur Verfügung. Ein Bestromen der Tauchspule führt aufgrund der prinzipbedingten Lorenzkraft zu einer Relativbewegung zwischen der Spule und dem Topfmagnet. Die Schubkraft dieses Stellglieds ist eine Funktion des Stromes. Die Richtung der Schubkraft wird durch die Spannungspolarität vorgegeben. Die Relativbewegung zwischen dem ortsfesten und dem beweglichen Teil des Stellgliedes wird benutzt, um die Greifelementeträger bzw. die Greifelemente gegenüber ihrem tragenden Gehäuse zu verschieben.

In den beschriebenen Ausführungsbeispielen ist die Tauchspule ortsfest am Vorrichtungsgehäuse befestigt, während der glockenartige Topfmagnet als bewegliches Teil auf die entsprechenden Getriebeteile oder Greifelementeträger wirkt. Selbstverständlich kann auch der Topfmagnet im Gehäuse ortsfest angeordnet sein, während die Tauchspule - wie beim Lautsprecher - die antreibende Relativbewegung ausführt.

Das oder die elektrodynamischen Stellglieder werden innerhalb des Gehäuses der Greifvorrichtung sowohl zum Greifen als auch zum Loslassen des Werkstücks bzw. der Last bestromt. In mindestens einer Ausführungsvariante wird dennoch das Werkstück oder die Last mittels Federkraft kraft- und/oder formschlüssig gehalten. Die Federkraft der stets vorgespannten Federelemente kann von einer Schraubendruckfeder, einer Zugfeder, einer Torsionsfeder, einer Blattfeder, einer Tellerfeder oder dergleichen aufgebracht werden. Ferner sind zur Kraftaufbringung auch Gummifedern oder eine pneumatische Federung denkbar. Hierfür können auch mehrere Federn oder verschiedene Federsysteme miteinander kombiniert werden.

Da die Greifelemente in der Schließstellung - aufgrund von ggf. größeren Werkstücktoleranzen - nicht immer genau die gleiche Position einnehmen können, können zum Ausgleich kleinerer Greifhubdifferenzen beispielsweise zumindest bereichsweise elastische Greifelemente oder elastische bzw. teilelastische Getriebeteile verwendet werden.

Weitere Einzelheiten der Erfindung ergeben sich aus den Unteransprüchen und der nachfolgenden Beschreibung einer schematisch dargestellten Ausführungsform.
- Figur 1:: Teilschnitt einer Greifvorrichtung in Schließstellung;
- Figur 2:: Teilschnitt der Greifvorrichtung aus Figur 1 in Offenstellung.

Eine Greifvorrichtung besteht in der Regel aus mindestens zwei in oder an einem Vorrichtungsgehäuse gelagerten und geführten Greifelementeträgern (21, 22), die durch ein im Vorrichtungsgehäuse (10) untergebrachten gesteuerten oder geregelten Antrieb (30, 60) zwischen einer Offen- und einer Schließstellung bewegt werden. An den zumindest bereichsweise aus dem Vorrichtungsgehäuse (10) herausschauenden Greifelementeträgern (21, 22) sind die Greifelemente montiert, die an die entsprechende Greifaufgabe angepasst sind. Der die Greifelemente in Bewegung versetzende Antrieb besteht aus einem elektrischen Stellglied (60), das direkt oder über ein mechanisches Getriebe (30) auf mindestens einen der Greifelementeträger (21, 22) wirkt. In einzelnen Fällen sind mehrere, ggf. sogar verschiedenartige Getriebe hintereinander angeordnet.

Die Extrempositionen der Greifelemente, also die Offen- und die Schließstellung, können, genauso wie ausgewählte Zwischenpositionen, sensorisch überwacht sein, wobei der einzelne Sensor in der Regel ein entsprechendes, einfach zu verarbeitendes elektrisches Signal liefert.

Auch werden die Greifelemente bzw. die Greifelementeträger oder Teile der sie bewegenden Getriebe in der Offen- oder der Schließstellung, ggf. auch in beiden Stellungen, mit Hilfe spezieller Vorrichtungen lösbar gehalten, um in Phase, in der der die Greifelementen das entsprechende Werkstück halten, keine Fremdenergie zu benötigen.

Die Greifelemente sind Greifbacken, die zum einen als Außengreifer das Werkstück form- oder kraftschlüssig in zwei oder mehrfacher Ausführung verliersicher umgreifen. Zum anderen sind sie Innengreifer, die das entsprechende Werkstück mit zwei oder mehr Greifbacken ergreifen, indem sie in spezielle Ausnehmungen des Werkstücks eingeführt werden, um sich dort in einer Spreizbewegung festzusetzen.

Die die Greifelemente tragenden Greifelementeträger sind auf zwei verschiedene Arten im Vorrichtungsgehäuse gelagert. Eine erste Greifarmlagerungsart basiert auf dem Prinzip einer Linearführung. Hier ist der Greifelementeträger ein Schlitten, der in einer entsprechenden Geradführung im Vorrichtungsgehäuse gelagert und lineargeführt ist. In einer ersten Alternative wird hierbei der Schlitten quer zu der Verfahrrichtung formschlüssig vom Vorrichtungsgehäuse umgriffen, vgl. T-Nut-Führungen, Vierkantführungen, Zwillingsrundführungen. Dabei berühren sich die Führungsflächen des Schlittens und des Gehäuses direkt oder über dazwischen gefügte Wälzkörper. In einer zweiten Alternative wird der Schlitten mittels quer zur Verfahrrichtung angeordneten elastisch verformbaren Blattfedern geführt. Die Verformung folgt hier dem Hookschen Gesetz, d.h. die Blattfederverformung ist immer proportional zur Materialspannung. In einer dritten Alternative ist der Schlitten im Gehäuse aerostatisch gelagert. Der Schlitten schwimmt eingeklemmt zwischen Luftkissen, die von einer äußeren Druckquelle unter einem nahezu konstanten Druck gehalten werden. In einer vierten Alternative wird der jeweilige Schlitten im Gehäuse zwischen Magnetfeldern eingespannt.

Die translatorisch bewegbaren Schlitten sind bei der Verwendung von zwei Greifelementen entweder fluchtend zueinander gelagert, oder sie sind parallel zueinander versetzt angeordnet. Sie bilden die Gruppe der Parallelgreifer. Bei drei und mehr Schlitten sind die Führungen meist sternförmig zueinander angeordnet, wobei die Führungen oft in nur einer Ebene liegen.

Eine zweite Greifarmlagerungsart basiert auf dem Prinzip einer Schwenkführung. In einer ersten, formschlüssigen Alternative wird hierbei der Schlitten als bolzenartiger Schwenkschlitten in einer Bohrung des Vorrichtungsgehäuses, in der er hin- und her schwenken kann. Die Führungsflächen des Schwenkschlittens und des Gehäuses berühren sich direkt oder über dazwischen gelegte Wälzkörper. In einer zweiten Alternative wird der Schwenkschlitten mittels einer - koaxial zur seiner Schwenkachse angeordneten - elastisch verformbaren Torsionsfeder geführt. Die Torsion folgt auch hier dem Hookschen Gesetz. In einer dritten Alternative ist der Schwenkschlitten im Gehäuse in einer Buchse aerostatisch gelagert. In einer vierten Alternative wird das Luftkissen durch mindestens ein Magnetfeld ersetzt.

Jede Greifvorrichtung hat eine Längsrichtung bzw. eine Längsachse. Ihre Lage innerhalb des Vorrichtungsgehäuses wird definiert über die Bewegungsrichtungen der Greifelemente. Bei translatorisch geführten Greifelementen ist die Längsrichtung quer zu den einzelnen Bewegungsrichtungen der jeweiligen Greifelemente orientiert.

Sind die Greifelemente an schwenkbaren Greifelementeträgern angeordnet und liegen die Schwenkachsen der Greifelementeträger in einer Ebene, so verläuft die Längsrichtung der Greifvorrichtung zum einen normal zu dieser Ebene und zum anderen schneidet sie den Mittelpunkt desjenigen Tangentialkreises, dessen Tangenten die zuvor genannten Schwenkachsen sind.

Um die Greifelementeträger in Bewegung zu versetzen, wird ein Antrieb benötigt. Letzterer setzt sich aus einem Motor bzw. einem Stellglied und einem Getriebe oder einer Getriebegruppe zusammen. Ggf. wirkt der Motor bzw. das Stellglied auch direkt auf die entsprechenden Greifelementeträger.

Bei einem großen Teil der Greifvorrichtungen hat das eingesetzte Stellglied einen Antriebsschlitten, der einen zur Vorrichtungslängsrichtung parallelen Hub erzeugt. Dieses motorische Stellglied, dessen Antriebsrichtung hier von unten nach oben angenommen wird, wird mittels eines mechanischen Getriebes in eine idealerweise quer zur Vorrichtungslängsrichtung angeordnete Greifrichtung umgelenkt. Der Greifelementeträger ist also ein horizontaler Schlitten, der hier nur beispielhaft - bei einem Außengreifer - von der Vorrichtungsgehäusemitte aus nach links angetrieben wird.

Selbstverständlich kann der Greifelementeträger gegenüber der idealen Horizontalrichtung bei bestimmten Getriebetypen um ± 45 Winkelgrade abweichen.

Auf das dem Greifelementeträger direkt vorgelagerte Getriebe kann auch ein zwischen diesem und dem Stellglied angeordnetes weiteres Getriebe einwirken. Hierbei hier angenommen, dass sich der Getriebeausgang des dem Stellglied direkt nachgeschalteten Getriebes ebenfalls parallel zur Vorrichtungslängsrichtung bewegt.

Die Umlenkung des zur Vorrichtungslängsrichtung parallelen Hubs in eine quer zur Vorrichtungslängsrichtung orientierte Bewegung lässt sich bevorzugt mit der Gruppe der Hebelgetriebe realisieren. Zu dieser Gruppe gehören die Kurvengetriebe, die Gelenkgetriebe, die Rädergetriebe und verschiedene Misch- oder Überlagerungsformen.

Ein einfaches Kurvengetriebe ist das Schiebekeilgetriebe. Hier trifft der vertikal orientierte Antriebsschlitten mit seiner schräg zu seinem Hub ausgerichteten Stirnfläche auf die Stirnfläche des anzutreibenden, horizontal bewegbaren Greifelementeträgers. Die Stirnfläche dieses Greifelementeträgers ist ebenfalls abgeschrägt. Haben die schrägen Stirnflächen der beiden Schlitten - Antriebsschlitten und Greifelementeträger - jeweils einen 45°-Keilwinkel, so wird der vertikale Hub ohne Übersetzung in eine horizontale Querbewegung umgesetzt.

Wird bei einer rechtwinkeligen Anordnung der Schlitten der Keilwinkel des antreibenden Schlittens - zum Zwecke der Übersetzung - zu Gunsten des Antriebsschlittens vergrößert, verringert sich der Hub des Greifelementeträgers gegenüber dem des Antriebsschlittens.

Ein weiteres Kurvengetriebe ist das Kulissengetriebe. Bei dieser Variante ist im Antriebsschlitten pro zu bewegendem Greifelementeträger z.B. eine Nut eingearbeitet. In die jeweilige Nut greift ein Gleitzapfen ein, der am entsprechenden Greifelementeträger befestigt ist. Ist dies beispielsweise ein Langloch, das gegenüber der Vorrichtungslängsrichtung unter 45 Winkelgraden von links unten nach rechts oben verläuft, wird bei einem vertikalen Aufwärtshub des Antriebsschlittens ein links der Vorrichtungslängsrichtung bzw. der Gehäusemittellinie angeordneter Greifelementeträger von der Gehäusemittellinie wegbewegt. In diesem Fall wird die Hubbewegung des Antriebsschlittens eins zu eins auf den Greifelementeträger übertragen.

Wird der Winkel, den das Langloch mit der Vorrichtungslängsrichtung einschließt, kleiner als 45 Winkelgrade, erzeugt ein großer Hub des Antriebsschlittens einen kleineren Hub des Greifelementeträgers. In dem Maße, in dem sich der Hub des Greifelementeträgers verkürzt, vergrößert sich - zumindest theoretisch - seine Klemmkraft.

Bei dieser Variante ist es auch möglich, das Langloch, in das der Zapfen des Greifelementeträgers eingreift, z.B. bogen- oder sichelförmig auszuführen, um die hubabhängige Klemmkraftänderung und/oder die Hubübersetzung an bestimmte Aufgaben anzupassen. In diesem Fall besteht zwischen der Hubbewegung des Antriebsschlittens und der Hubbewegung des Greifelementeträgers - zumindest bereichsweise - kein linearer Zusammenhang.

Selbstverständlich kann auf dem Zapfen mindestens ein Wälzlager angeordnet sein, das den Kontakt zur Wandung des führenden Langlochs herstellt. Ferner ist es möglich, dass der Zapfen und das Langloch ihre Position an den beiden Schlitten tauschen.

Eine einfache Alternative stellt ein Gelenkgetriebe dar, bei dem zwischen dem Antriebsschlitten und angetriebenen Greifelementeträger eine Koppelstange gelenkig angeordnet wird. Die Koppelstange nimmt dabei zwischen ihren beiden Endlagen gegenüber der Vorrichtungslängsrichtung einen Winkel von 45 ± 30 Winkelgraden ein.

Eine andere Getriebevariante ist die Kombination aus einem Gelenk- und einem Hebelgetriebe, bei der zwischen dem Antriebsschlitten und dem angetriebenen Greifelementeträger ein im Vorrichtungsgehäuse separat gelagertes Übertragungselement in Form eines Kniehebels verwendet wird. Der Kniehebel wird in seinem Kniebereich im Gehäuse gelagert. Das erste Hebelende des z.B. in der Ausgangslage horizontalen ersten Hebelarms ist gelenkig am Antriebsschlitten angelenkt, während das Hebelende des zweiten - z.B. in der Ausgangslage vertikalen - Hebelarms am Greifelementeträger eingehängt ist. Bei dem vertikalen Hub des Antriebsschlittens wandelt der Kniehebel diese Bewegung - unter einer eigenen Schwenkbewegung - in eine Horizontalbewegung des Greifelementeträgers um. Sind die beidseits des Kniebereiches gelegenen Hebelarme des Kniehebels gleich lang, liegt keine Getriebe-übersetzung vor.

Das gerade beschriebene Gelenkgetriebe kann auch als Zahnstangengetriebe ausgebildet werden. Dazu weist der Antriebsschlitten seitlich eine Zahnstange auf, die mit einem Zahnrad oder einem Zahnsegment kämmt, dessen Schwenkachse mit der Schwenkachse des zuvor genannten Kniehebels zusammenfällt. Am Zahnrad ist der nach oben ragende zweite Hebelarm des vorherigen Kniehebels befestigt, der mit dem horizontal bewegbaren Greifelementeträger gekoppelt ist. Das durch den Antriebsschlitten verschwenkte Zahnrad schwenkt diesen Hebelarm, um den angetriebenen Greifelementeträger zu verschieben. Entspricht die Länge des Hebelarms dem Radius des Zahnradwälzkreises, liegt keine Übersetzung zwischen dem Antriebs- und dem Abtriebshub vor.

In einer weiteren Variante wird aus dem Zahnstangengetriebe ein Rädergetriebe. In diesem Fall wird der z.B. in der Ausgangslage nach oben ragende Hebelarm durch ein Zahnrad ersetzt, das mit dem Zahnrad der Vorgängervariante auf einer Welle sitzt. Dieses zweite Zahnrad kämmt mit einer an dem Greifelementeträger angeordneten Zahnstange. Wird hier keine Übersetzung zwischen dem Antriebs- und dem Abtriebshub angestrebt, können beide Zahnräder durch ein einziges ersetzt werden. Ansonsten ist z.B. bei einer Vergrößerung des Abtriebshubs der Teilkreis des mit dem Antriebsschlitten kämmenden Zahnrades kleiner als der Teilkreis des anderen.

Für den Fall, das der Hub des Antriebsschlittens senkrecht zur Vorrichtungslängsrichtung und parallel zur Greifrichtung ist, kann das jeweilige Stellglied, sofern es ein Linearantrieb wie eine Tauchspule, ein Hubmagnet oder ein anderer Linearantrieb ist, den jeweiligen Greifelementeträger direkt antreiben.

Wird als Stellglied ein konventioneller Elektromotor, ein Torquemotor, ein Schrittmotor oder dergleichen verwendet, sofern dessen Antriebswelle eine Dreh- oder Schwenkbewegung von mehr als 10 Winkelgraden realisieren kann, kann dessen Welle eine Schnecke antreiben. Die Schnecke kämmt mit einem im Vorrichtungsgehäuse gelagerten Zahnrad, das entweder in eine an einem Greifelementeträger angeordneten Zahnstange oder Zahnstangenverzahnung eingreift oder das einen Hebelarm aufweist, der mit dem horizontal bewegbaren Greifelementeträger gekoppelt ist. Über die Kombination aus einem Schnecken- und einem Hebelgetriebe dreht die Antriebswelle ein Zahnrad, das einen Hebelarm verschwenkt, um den angetriebenen Greifelementeträger zu verschieben.

Alternativ kann der vorgenannte Rotations- oder Schwenkmotor mit seiner Schnecke direkt in ein in einem Greifelementeträger eingearbeitetes Gewinde eingreifen, um ein Schraubgetriebe zu verwirklichen. Das Gewinde ist dabei parallel zur Greifrichtung orientiert. Gegebenenfalls kann zwischen der Schnecke und dem Greifelementeträger auch eine Kugelrollspindel angeordnet werden.

Im Folgenden wird der als horizontaler Schlitten beschriebene Greifelementeträger durch einen schwenkbaren Greifelementeträger ersetzt, dessen Schwenkwinkel in der Regel kleiner als 90 Winkelgrade ist. Das jeweilige, den schwenkbaren Greifelementeträger bewegende Getriebe wird hier nur beispielhaft - bei einem Außengreifer - so dargestellt, als ob er ein Greifelement trägt, das links von der Vorrichtungsgehäusemitte angeordnet ist und in einer im Uhrzeigerdrehsinn durchgeführten Schwenkbewegung in seine Schließstellung geht. An allen schwenkbaren Greifelementeträgern ist zum einen ein Adapter vorgesehen, der das jeweilige Greifelement trägt und zum anderen ist ein Schwenkhebelarm angeordnet, an dessen freien Ende ein antreibendes Getriebeteil angelenkt wird. Ein Gelenk am freien Ende des Schwenkhebelarms ist immer um eine bestimmte Hebelarmlänge von der Schwenkachse des Greifelementeträgers entfernt. In der Regel sind die Schwenkachsen des Greifelementeträgers und des Gelenkes am freien Ende des Schwenkhebelarms parallel zueinander orientiert.

Ein aus einfacheren Bauteilen aufgebauter Getriebetyp stellt das Hebelgetriebe dar. Dazu ist zwischen dem Antriebsschlitten und dem Schwenkhebelarm des Greifelementeträgers eine Koppelstange angeordnet.

Ein anderer, ebenfalls einfach aufgebauter Getriebetyp ist das Kulissengetriebe. Hier befindet sich im Antriebsschlitten eine Kulissennut, in die ein am Schwenkhebelarm angeordneter Zapfen eingreift. Die Kulissennut ist z.B. ein gerades Langloch, das gegenüber der Verfahrrichtung des Antriebsschlittens einen Winkel von 45 Winkelgraden einnimmt. Allerdings kann auch hier die Kulissennut sichelförmig, kreisbogenförmig, s-förmig oder mit einer anderen beliebigen Krümmung ausgeführt sein.

Auch bei den schwenkbaren Greifelementen ist ein Zahnstangengetriebe denkbar. Dazu wird am Antriebsschlitten wiederum eine Zahnstange angeordnet, die mit einem Zahnrad bzw. Zahnsegment kämmt, dessen Drehachse mit der Schwenkachse des Greifelementeträgers zusammenfällt.

Ein räumliches Rädergetriebe entsteht, wenn der linear verfahrbare Antriebsschlitten durch eine rotierende Antriebswelle, bzw. einen Schwenkschlitten, ersetzt wird, der eine Schnecke trägt. Die Schnecke kämmt mit dem Zahnrad bzw. dem Zahnsegment, das am Greifelementeträger - wie bei dem vorangegangenen Beispiel - befestigt ist. Die Mittellinie der Schnecke kreuzt hier in der Regel senkrecht die Schwenkachse des Greifelementeträgers.

Ein weiterer Getriebetyp stellt ein ebenes Rädergetriebe dar, bei dem ein vom Stellglied angetriebenes Stirnrad mit einem zweiten Zahnrad oder Zahnsegment kämmt. Das zweite Zahnrad ist wiederum am Greifelementeträger so angeordnet, dass seine Drehachse deckungsgleich zu der Schwenkachse des Greifelementeträgers ist. Die Mittellinie des antreibenden Stirnrads ist hierbei parallel zur Schwenkachse des Greifelementeträgers ausgerichtet.

Alle zwischen einem oder mehreren Greifelementeträgern - unabhängig davon, ob sie linear oder oratorisch bewegt werden - und dem entsprechenden Antriebsschlitten oder der jeweiligen Stellgliedantriebswelle angeordneten Getriebe können auch durch mehrere getriebetechnisch hintereinander angeordnete Getriebe ersetzt werden. Diese Getriebe können dabei bezüglich der Getriebetypen und der Getriebeübersetzungen variieren.

Im Vorrichtungsgehäuse ist als Stellglied z.B. ein hochdynamischer Tauchspulenantrieb - in der Regel unterhalb des oder der Getriebe - eingebaut, der aus einem ortsfesten und einem linear beweglichen Teil besteht.

Das ortsfeste Teil ist eine Spule, die aus einem Spulenkörper und einer darauf aufgewickelten Wicklung besteht. Der beispielsweise aus Kunststoff oder einer Aluminiumlegierung hergestellte Spulenkörper sitzt mit seiner Unterseite unverrückbar im Vorrichtungsgehäuse, wobei die Mittellinie der Spule z.B. mit der Längsachse des Vorrichtungsgehäuses zusammenfällt.

Das bewegliche Teil des Stellglieds ist eine mit einem Kern ausgestattete Glocke, die von oben her mit wenig Spiel über die Spule gestülpt wird. Hierbei umgreift die Glocke die Spule außen, während der Kern in die Spulenbohrung hineinragt.

Die Glocke ist beispielsweise aus einem außen gasnitrierten Einsatzstahl gefertigt. Der Kern ist zweiteilig ausgeführt. In die Glocke ist mittig ein zylindrischer Magnetkern, z.B. ein Neodym-Magnet, eingelassen. Der Magnetkern kann auch die Form eines zylindrischen Rohres aufweisen. Am unteren Ende des Magnetkerns ist eine z.B. aus dem Werkstoff X90CrMoV18 gefertigte Jochplatte angeordnet. Hierbei schließt die Unterseite der Jochplatte, die auch eine zentrale Bohrung aufweisen kann, mit der unteren Kante der Glocke ab. Der Kern und die Jochplatte sind z.B. untereinander und gegenüber der Glocke verklebt.

Die Glocke stellt in diesem Fall den Antriebsschlitten oder zumindest einen Teil hiervon dar. Sie ist dazu im Vorrichtungsgehäuse mit geringem radialem Spiel gleitgelagert geführt.

Anstelle des Tauchspulenantriebs können auch Zug- Druck- oder Klappmagnete sowie Proportionalmagnete eingesetzt werden.

Eine Haltevorrichtung hat die Aufgabe, die Greifelemente der Greifvorrichtung in den Endlagen oder zumindest in einer Endlage so zu sichern, dass der oder die elektrodynamischen Stellglieder für die reine Haltefunktion keine elektrische Energie benötigen. Auch soll die jeweilige Haltevorrichtung kein Bauteil erfordern, das für das Halten der Greifelemente in den Endlagen selbst elektrischen Strom, Druckluft oder ein anderes Druckmedium benötigen.

Die Haltevorrichtungen lassen sich in drei Gruppen einteilen. Die erste Gruppe betrifft Vorrichtungen, deren Haltewirkung ausschließlich durch die regulären Antriebskräfte des Antriebsschlittens aufgehoben wird. Dabei kann die reguläre Antriebskraft auch von einem Federspeicher zur Verfügung gestellt werden. Zu dieser Gruppe gehören u.a. Haltevorrichtungen, in denen Permanentmagnete, Führungsnuten mit abknickenden Nutverlängerungen, Hebel in Sperrlagen oder federbelastete Rastgesperre gehören.

Eine Möglichkeit der Realisierung besteht darin, den linear verfahrbaren Antriebsschlitten, den angetriebenen Greifelementeträger oder ein bewegliches Getriebeteil in seiner entsprechenden Extremlage mit Hilfe eines ortsfesten Permanentmagneten zu halten. Diese Art der Haltevorrichtung ist in den meisten Greifvorrichtungen anwendbar.

Besonders eignen sich diese Magnete für klar definierte Endlagen, wie die Offenstellung, da hier zwischen dem Magnet und dem sich in der Endlage befindenden Vorrichtungsteil kein Luftspalt vorhanden ist. Zudem erfolgt oft der Verfahrhub in die Offenstellung mittels Federspeicher, so dass das Lösen des Vorrichtungsteils vom Magneten mit der Vorschubkraft des elektrischen Antriebs erfolgt.

Die Permanentmagnete befinden sich beispielsweise in Form von zylindrischen oder quaderförmigen Stabmagneten in der entsprechenden Endposition des Antriebsschlittens. Sie werden in Richtung ihrer Längsachse angefahren. Pro Endlage können auch mehrere Permanentmagenten, z.B. auf einem Kreis um die Mittellinie des Antriebsschlittens herum, angeordnet werden. Zur Verstärkung der Haltekraft ist es auch denkbar, zu einem im Vorrichtungsgehäuse fixierten Magneten einen entsprechenden Gegenmagneten im Antriebsschlitten anzuordnen, wobei dann die Mittellinien der beiden Magnete zueinander fluchten.

Selbstverständlich kann die Greifvorrichtung auch in der Schließstellung der Greifelemente mittels eines oder mehrerer Magneten blockiert werden, wenn die Position der Schließstellung wiederholgenau erreicht wird.

Bei Greifvorrichtungen, die ein Kurven- oder Kulissengetriebe (30) verwenden, besteht die Haltevorrichtung (70) in einer Verlängerung (73, 74) bzw. Umgestaltung der entsprechenden Führungsnut (35, 36) in einer oder beiden Getriebeendlagen. Die entsprechende Nutverlängerung (73, 74) benötigt jeweils einen Abschnitt, dessen Führungsrichtung z.B. parallel zur Verfahrrichtung des Antriebsschlittens orientiert ist. Hat beispielsweise das entsprechende Getriebeelement als Führungskurve eine gerade Führungsnut, die gegenüber der Längsrichtung des Antriebsschlittens um z.B. 45 Winkelgrade geneigt ist, so wird am vorderen und/oder hinteren Ende eine Führungsnutverlängerung vorgesehen, deren Führungsrichtung z.B. parallel zur Antriebsschlittenlängsrichtung ausgerichtet ist. Wirkt nun eine Aufdrückkraft entgegen der regulären Greifrichtung (5), wird ein am Greifelementeträger (21, 22) angeordneter Führungsbolzen (23, 24), nur quer zur Führungsrichtung der Führungsnutverlängerung belastet. Die Aufdrückkraft wird im Vorrichtungsgehäuse (10) vollständig abgestützt, ohne das Kurven- bzw. Kulissengetriebe (30) entgegen seiner Schließrichtung bewegen zu können.

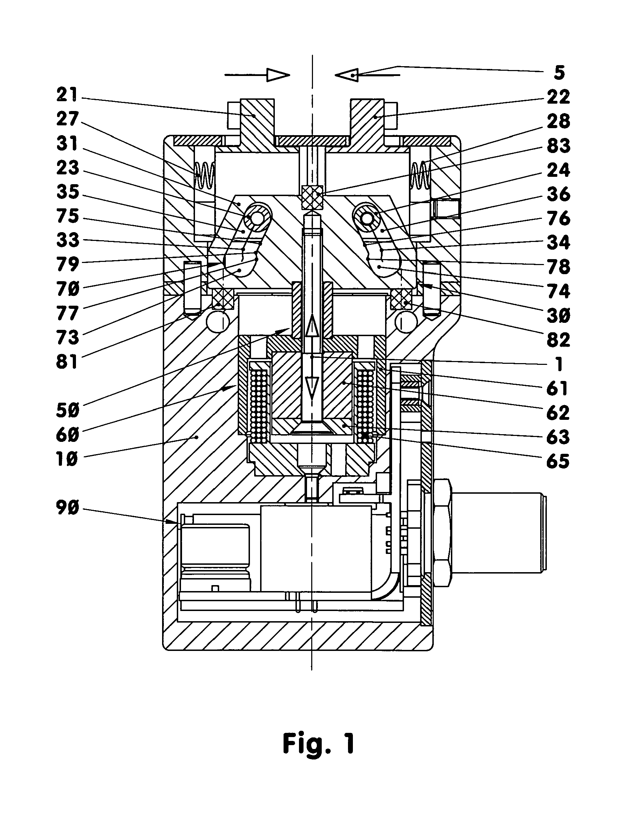

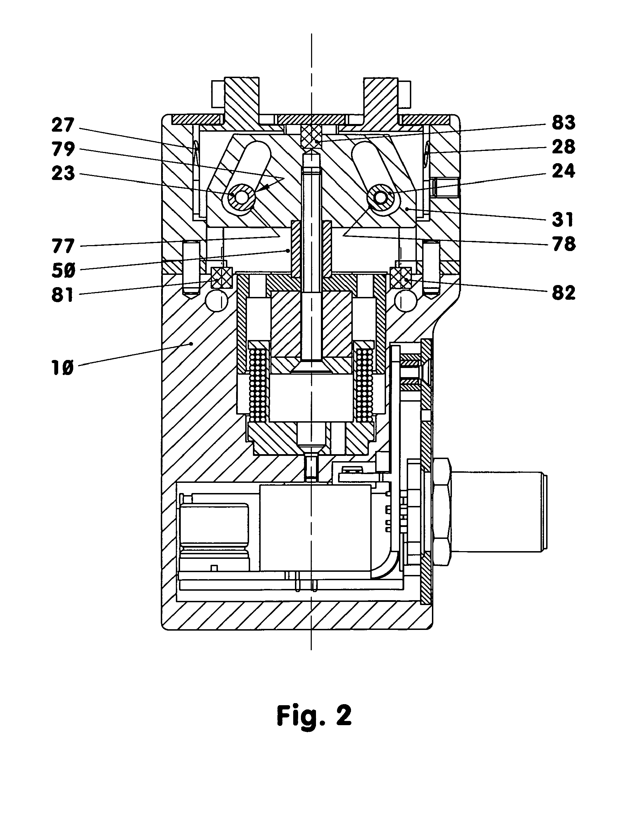

Aus den Figuren 1 und 2 sind u.a. jeweils um 25 Winkelgrade gegen die Verfahrrichtung des Antriebsschlittens (50) geneigte Führungsnuten (35, 36) bekannt, die in ihren unteren Bereichen jeweils in einer sich verbreiternden Nutverlängerung (73, 74) enden. Die gezeigte Nut (35, 36) ist beispielsweise mit einem Fingerfräser hergestellt, der in einem ersten Schritt eine gerade Strecke von 7,7 mm entlang einer Hauptrichtung fräst. In einem zweiten Schritt verfährt er 0,63 mm z.B. lotrecht zur Hauptrichtung, um dann in einem dritten Schritt entgegen der Hauptrichtung fräsend 0,85 mm zurückzufahren.

Der Fingerfräser weist einen Durchmesser von 4 mm auf. Die Nut ist gerade und hat auf einer Länge von 5,3 mm demnach die Breite von 4 mm. In dem Bereich der Nutverbreiterung (73, 74) ist die Führungsnut (35, 36) auf einer Länge von 2,4 mm um 0,63 mm breiter. Die Übergangsstelle (79) zwischen dem schmalen Abschnitt der Führungsnut (35, 36) und der Nutverbreiterung (73, 74) ist mit einem Radius von 0,2 mm abgerundet.

Durch dieses Herstellungsverfahren ergibt sich eine Führungsbolzenbahn (33, 34), die am unteren Ende des geraden, schmalen Nutabschnittes mit einem Radius von 2,2 mm bogenförmig abknickt. Der Zentriwinkel des Bogens beträgt z.B. 45 Winkelgrade. Nach dem Bogen setzt sich die Führungsbolzenbahn (33, 34) mit einem zweiten, kurzen linearen Abschnitt parallel versetzt zu ihrem ersten linearen Abschnitt fort. An der Übergangsstelle zwischen dem Bogen und dem zweiten linearen Abschnitt hat die Führungsbolzenbahn (33, 34) einen Knick.

Da bei beiden Nuten (35, 36) die Nutverbreiterungen (73, 74) zur Mittellinie der Kulissenplatte (31) hin versetzt sind, verkürzt sich - beim Verfahren in die Offenstellung - im Bereich der Nutverbreiterungen (73, 74), unmittelbar hinter der Übergangsstelle (79), der Abstand der Greifelementeträger (21, 22). Hier findet somit - auf einer kurzen Strecke - eine Umkehrung der Greifrichtung (5), also des momentanen Hubes der Greifelementeträger (21, 22) statt. Da zudem die Greifelementeträger (21, 22) mittels der Schraubendruckfedern (27, 28) in Richtung der Schließstellung belastet werden, gleiten die Führungsbolzen (23, 24) grundsätzlich entlang der jeweiligen Nutinnenkontur (75, 76), so dass sie regelrecht in die entsprechenden Hintergriffe (77, 78) der Nutinnenkonturen (75, 76) einrasten. Somit sind die Greifelementeträger (21, 22) in der Offenstellung auch gegen stärkere Gerätevibrationen abgesichert.

Bei der in den Figuren 1 und 2 gezeigten Konstruktion wird zum Greifen des Werkstücks der Antriebsschlitten (50) aus der in Figur 2 gezeigten Offenstellung durch eine kurze Bestromung des Stellglieds (60) beschleunigt. Sobald die Führungsbolzen (23, 24) aus den Hintergriffen (77, 78) ausgerastet sind, wird die weitere Schließbewegung der Greifelementeträger (21, 22) durch die als Federspeicher wirkenden, gespannten Federelemente (27, 28) unterstützt.

Um die Greifelementeträger (21, 22) in die in Figur 2 gezeigte Offenstellung zu bewegen, wird das Stellglied (60) so lange bestromt, bis die Führungsbolzen (23, 24) in den Hintergriffen (77, 78) einrasten. Während dieses Vorganges werden die Federelemente (27, 28) bis zum Überfahren der Übergangsstelle (79) gespannt.

Nach den Figuren 1 und 2 sind zwischen dem Vorrichtungsgehäuse (10) und der Kulissenplatte (31) in beiden Verfahrrichtungen des Antriebschlittens (50) entsprechende Dämpferelemente (81, 82; 83) angeordnet. Die beispielsweise zylindrischen Dämpfungselemente (81, 82) sitzen, z.B. verklebt, in Bohrungen des Gehäuses (10). Beim Erreichen der Schließstellung legt sich die Kulissenplatte (31) an sie an.

Um die Öffnungsbewegung abzudämpfen, vgl. Figur 2, ist am oberen Ende der Kulissenplatte (31), ebenfalls in einer Bohrung, ein weiteres Dämpfungselement (83) angeordnet. Es schlägt beim Erreichen der Offenstellung am oberen Deckel des Gehäuses (10) an.

Die Größe und die Elastizität der Dämpfungselemente (81, 82; 83) ist so gewählt, dass die Führungsbolzen (23, 24) nie an den jeweiligen Enden der Führungsnuten (35, 36) anschlagen.

Wird innerhalb einer Greifvorrichtung ein Hebelelement verwendet, besteht die Möglichkeit, mindestens einen Hebelarm so anzuordnen, dass seine beiden Stützgelenke im Bereich einer Endlage eines Greifelementeträgers auf einer Linie liegen, die zumindest annähernd parallel zur Verfahrrichtung des Greifelementeträgers liegt. Der Hebelarm nimmt dann eine Sperrlage ein, man kann sie auch als Strecklage bezeichnen, die er immer durch ein aktives Verfahren des Antriebsschlittens verlassen kann, jedoch nicht durch äußere Kräfte, die auf die Greifelemente wirken.

Eine andere Haltevorrichtung basiert auf Rastgesperren. Derartige Gesperre verhindern die gegenseitige Beweglichkeit geführter Teile in beide Bewegungsrichtungen bis zu einer bestimmten Grenzkraft. Ein einfaches Beispiel ist ein sogenannter Kugelschnäpper nach DIN 68 856-4, Nr. 1.1.2, Ausgabe 1983. Hier befindet sich in einer mit einem Außengewinde versehenen Büchse eine federbelastete Kugel, die eine Stück weit aus der Büchse herausragt. Die Kugel kontaktiert z.B. die Außenkontur eines beweglichen Teils des Antriebsschlittens quer zu dessen Verfahrrichtung, um dort - beim Erreichen einer Endlage - in eine entsprechende Rastkerbe lösbar einzurasten.

Weitere Rastgesperretypen lassen sich der VDI/VDE 2253, Blatt 1, Oktober 1967 entnehmen.

Zur zweiten Gruppe der Haltevorrichtungen gehören Vorrichtungen, deren sperrende oder haltende Wirkung durch speziell zugeführte Fremdenergie betätigt und/oder gelöst wird. Die Fremdenergie betätigt dann vorwiegend elektrische oder pneumatische Kleinantriebe. Hierzu gehören Antriebe, die zum Fixieren des Antriebsschlittens in einer Endlage z.B. einen Sperrbolzen quer zur Verfahrrichtung des Antriebsschlittens bewegen, um mit diesem zu verrasten. Gegebenenfalls können auch mehrere Fremdenergien nebeneinander genutzt werden. So wird nur beispielsweise die Schließstellung mittels Druckluft gesichert, während die Offenstellung mit einem elektrisch betätigbaren Hubmagnet fixiert wird.

Hierunter fallen u.a. Zahnrichtgesperre, deren Sperrer z.B. elektromagnetisch entrastet werden. Hierzu befindet sich z.B. am Antriebsschlitten entlang seiner Längsrichtung eine Zahnstange, deren Verzahnung ein Sägezahnprofil aufweist. In das Sägezahnprofil greift ein Sperrer so ein, dass sich der Antriebsschlitten in Vorwärtsrichtung unter dem Sperrer hindurch schieben lässt, ohne diesen zu behindern. Will sich jedoch der Antriebsschlitten in Rückwärtsrichtung bewegen, schnappt der Sperrer in die Verzahnung ein, um dies zu verhindern. Erst wenn der Sperrer mittels Fremdenergie zurückgezogen oder zurückgeschwenkt wird, kann der Antriebsschlitten wieder zurückfahren. Diese Variante eignet sich besonders für die Greiferschließstellung bei Greifvorrichtungen, die unterschiedlich große Werkstücke greifen müssen, so dass die Teilung des Sägezahnprofils viele Einzelendlagen zulässt.

Eine weitere Variante einer Haltevorrichtung dieser Gruppe stellt ein sogenannter Permanent-Elektro-Haftmagnet dar. Ein derartiger Magnet besteht aus einem Permanentmagnet zum Halten ferromagnetischer Werkstücke und einer Erregerwicklung. Letztere neutralisiert eingeschaltet das Permanentmagnetfeld. Hier wird z.B. zum Freigeben einer Endlagenposition nur ein kurzer Stromimpuls benötigt.

Eine dritte Gruppe von Haltevorrichtungen umfasst Vorrichtungen, die nur mit Hilfe eines wiederholten Betätigen des Antriebsschlittens in eine bestimmte Richtung gelöst werden können. Die bestimmte Richtung ist dabei die Richtung, in die sich beim vorherigen Schritt der Antriebsschlitten schon bewegt hat. Zu dieser Gruppe gehören die sogenannten bistabilen Rastmechaniken. Eine solche Mechanik wird u.a. in vielen handelsüblichen Kugelschreibern benutzt. Die Rastmechanik umfasst als bewegliche Teile einen Druckknopf und einen Minenhalter, wobei der Minenhalter mittels Zapfen im Druckknopf um seine Längsachse drehbar geführt ist. Der Druckkopf hat als vorderen Bereich einen Druckknopfstollenbereich, während der Minenhalter als vorderen Bereich einen Minenhalterstollenbereich aufweist. Beide Stollenbereiche haben - zur Vereinfachung der Erläuterung - zunächst z.B. acht Stollen, die durch acht Nuten getrennt sind. Die Stollen sind äquidistant am Umfang verteilt. Beide Stollenbereiche haben zunächst jeweils den gleichen Querschnitt. Die Stollen des Druckknopfstollenbereiches sind vorn unter 45 Winkelgraden keilförmig abgeschrägt, wobei sich die Keilfläche von einer Stollenflanke zur anderen Stollenflanke erstreckt. Die Normalen der Keilflächen kreuzen die deckungsgleichen Mittellinien des Druckknopfes und des Minenhalters im gleichen Abstand und unter dem gleichen Winkel.

Die Stollen des Minenhalters haben nach hinten weisende Keilflächen, die unter 45 Winkelgraden abgeschrägt sind. Die Keilflächen des Minenhalters sind so geneigt, dass sie passgenau an den Keilflächen des Druckknopfes anliegen, sobald die federbelastete Mine den Minenhalter gegen den Druckknopf pressen kann. Dies ist immer dann der Fall, wenn die Mine in das Gehäuse eingefahren ist.

Am Minenhalter ist jeder zweite Stollen komplett entfernt.

Im ortsfesten Kugelschreibergehäuse befindet sich im hinteren Bereich ein Keilnabenprofil, in dem bereichsweise der Druckknopfstollenbereich und der Minenhalterstollenbereich geführt sind. Die Stollen dieser Bereiche sind in den Nuten des Keilnabenprofils geführt, solange die Mine mittels des Druckknopfes nicht über die reguläre Schreibstellung aus dem Gehäuse herausgeschoben wird. Jede zweite Nut des Keilnabenprofils ist in Radialrichtung weniger tief, so dass die Stollen des Minenhalters nur in jede zweite Nut hineinpassen.

Beim Drücken des Druckknopfes schieben die Stollen des Druckknopfes mit ihren Keilflächen den Minenhalter an dessen Keilflächen solange nach unten, bis dessen Stollen die Nuten des Keilnabenprofils verlassen haben. In diesem Augenblick verdreht sich der Minenhalter unter der Wirkung der Keilflächen um eine Zahnung. Die Stollen des Minenhalters liegen nun an den Vorderkanten der weniger tiefen Nuten des Keilnabenprofils an. Die Schreibmine ist ausgefahren.

Beim wiederholten Betätigen des Druckknopfes schieben die nach vorn fahrenden Stollen mit ihren Keilflächen die Keilflächen des Minenhalters wieder eine Teilung weiter, sodass der Minenhalter zusammen mit dem Druckknopf nach dem Loslassen desselben in die jeweils tiefere Nut des Keilnabenprofils hineinrutscht. Die Mine ist in das Gehäuse komplett eingezogen.

Eine andere Rastmechanik stellt ein bistabiles Formrichtgesperres dar, das z.B. einen Antriebsschlitten in einer seiner Endlagen mechanisch arretiert, vgl. DE 10 2010 045 108 A1. Dazu wird zwischen dem Vorrichtungsgehäuse und dem Antriebsschlitten ein Koppelelement angeordnet, das z.B. die Gestalt einer Schubstange hat. Das z.B. am Vorrichtungsgehäuse gelagerte Koppelelement greift in eine am Schlitten angeordnete, geschlossene Rastbahn ein, die mehrere Unstetigkeiten aufweist und den Hub des Schlittens in der Schlittenverfahrrichtung begrenzt.

Die Rastbahn wird z.B. durch einen am Schlitten vorhandenen Kulissenkanal realisiert. In den z.B. annähernd herzförmigen Kulissenkanal greift ein an dem Koppelelement befestigter Führungszapfen ein. Das freischwingende Ende des Koppelelements tastet die gekrümmte Rastbahn ab, wobei die von einander am entferntesten gelegenen Punkte z.B. den Endlagen des Antriebsschlittens entsprechen.

### Bezugszeichenliste:

- 1: Vorrichtungslängsrichtung
- 5: Greifrichtung

- 10: Gehäuse, Vorrichtungsgehäuse

- 21, 22: Greifelementeträger
- 23, 24: Rollzapfen, Führungsbolzen
- 27, 28: Federelemente, Schraubendruckfedern

- 30: Getriebe, Kulissengetriebe
- 31: Kulissenplatte
- 33, 34: Führungsbolzenbahn
- 35, 36: Nut, Führungsnut

- 50: Antriebsschlitten

- 60: Stellglied, Tauchspule
- 61: Glocke
- 62: Magnetkern
- 63: Jochplatte
- 65: Spule

- 70: Haltevorrichtung
- 73, 74: Nutverlängerung, Nutverbreiterung
- 75, 76: Nutinnenkontur
- 77, 78: Hintergriff
- 79: Übergangsstelle

- 81, 82: Anschlagelemente für die Schließstellung
- 83: Anschlagelement für die Offenstellung

- 90: Elektronik

## Patentansprüche

1. Greifvorrichtung mit Greifelemente tragenden Greifelementeträgern (21, 22),
- wobei die Greifelementeträger (21, 22) und mindestens ein elektrodynamisches Stellglied (60) in einem Gehäuse (10) gelagert sind,
- wobei das oder die elektrodynamischen Stellglieder (60) mindestens einen beweglichen Antriebsschlitten(50) oder eine Antriebswelle aufweisen, der oder die direkt oder über mindestens ein Getriebe (30) auf mindestens einen beweglichen Greifelementeträger (21, 22) wirkt, um das oder die Greifelemente zwischen einer Offen- und Schließstellung zu bewegen,
- wobei der Antriebsschlitten (50) in mindestens eine Schubrichtung oder die Antriebswelle in eine Rotationsrichtung elektrisch antreibbar ist,
**dadurch gekennzeichnet,**
- **dass** der Antriebsschlitten (50) oder mindestens ein Getriebeteil in der Offen- und/oder der Schließstellung des oder der Greifelemente durch mindestens eine - nur für den Auf- und den Abbau der Haltekraft mindestens eine Fremdenergie benötigende - Haltevorrichtung (70) lösbar fixiert wird.

2. Vorrichtung gemäß Anspruch 1, **dadurch gekennzeichnet, dass** das elektrodynamische Stellglied (60) ein Tauchspulenantrieb (61 - 65) ist.

3. Vorrichtung gemäß Anspruch 1, **dadurch gekennzeichnet, dass** das oder die Stellglieder mittels eines impulsartigen Stromstoßes angetrieben werden.

4. Greifvorrichtung gemäß Anspruch 1, **dadurch gekennzeichnet, dass** im Gehäuse - für den Gegenhub zur elektrisch bewirkten Antriebsrichtung des Antriebsschlittens - ein auf den Antriebsschlitten wirkender Federspeicher angeordnet ist.

5. Greifvorrichtung gemäß Anspruch 1, **dadurch gekennzeichnet, dass** die einzelne Haltevorrichtung auf einem mechanischen, elektrischen, magnetischen, pneumatischen oder hydraulischen Wirkprinzip beruht.

6. Greifvorrichtung gemäß Anspruch 1, **dadurch gekennzeichnet, dass** die einzelne mechanische Haltevorrichtung bei einem dem Antriebsschlitten nachgeschalteten Kulissengetriebe ein Kulissenabschnitt ist, der quer zur Greifrichtung des Greifelementeträgers liegt.

7. Greifvorrichtung gemäß Anspruch 1, **dadurch gekennzeichnet, dass** die einzelne mechanische Haltevorrichtung bei einem dem Antriebsschlitten (50) nachgeschalteten Kulissengetriebe (30) zur Führung von mindestens einem Greifelementeträger (21, 22) eine gekrümmte oder abgeknickte Führungsbolzenbahn (33, 34) aufweist, wobei - vor dem Erreichen der Öffnungs- und/oder Schließstellung - die Greifrichtung (5) sich umkehrt.

8. Greifvorrichtung gemäß Anspruch 1, **dadurch gekennzeichnet, dass** die einzelne elektrische Haltevorrichtung aus einem Hubmagnet oder einem Getriebeelektromotor besteht, dessen Hubschlitten den Antriebsschlitten oder Getriebeteile des die Greifelementeträger manipulierenden Getriebes blockiert bzw. blockieren.

9. Greifvorrichtung gemäß Anspruch 1, **dadurch gekennzeichnet, dass** die einzelne magnetische Haltevorrichtung aus mindestens einem im Gehäuse angeordneten Permanent- oder Elektromagnet besteht.

10. Greifvorrichtung gemäß Anspruch 1, **dadurch gekennzeichnet, dass** die einzelne pneumatische oder hydraulische Haltevorrichtung aus mindestens einer im Gehäuse angeordneten Zylinder-Kolben-Einheit besteht, deren Zylinder direkt oder indirekt den Hub oder den Winkel des Antriebsschlittens blockiert.
